# DEMANDE DE BREVET EUROPEEN

(11) **EP 3 883 105 A1**
(43) Date de publication de la demande: **22.09.2021**
(21) Numéro de dépôt: 21162212.1
(22) Date de dépôt: 12.03.2021
(51) Int. Cl.: H02M 1/32

(54) **DISPOSITIF DE DÉCHARGE D'UNE CAPACITÉ**

(30) Priorité: 20.03.2020 FR 2002751
(71) Demandeur: STMicroelectronics (Tours) SAS, 37100 Tours (FR)
(72) Inventeur: COLLEONI, Eric, 37100 Tours (FR)
(74) Mandataire: Cabinet Beaumont

(57) **Abrégé**

La présente description concerne un dispositif (2) de décharge d'une capacité (C) comprenant : un composant résistif (201) à valeur sélectionnable parmi au moins trois valeurs, destiné à être connecté en parallèle de la capacité (C) ; et un circuit (207) configuré pour sélectionner la valeur du composant (201).

## Description

### Domaine technique

La présente description concerne de façon générale les circuits électroniques, et plus particulièrement les circuits électroniques de décharge d'une capacité.

### Technique antérieure

On connaît des dispositifs électroniques, notamment des circuits électroniques, dans lesquels une capacité est chargée à une tension continue (DC). Lorsqu'un tel dispositif cesse de fonctionner, soit de manière volontaire car il est mis à l'arrêt ou éteint, soit de manière involontaire suite par exemple à un dysfonctionnement du dispositif, il est souhaitable de décharger la capacité pour éviter que l'énergie qui y est stockée ne soit accidentellement transmise à une personne en contact avec le dispositif.

Une telle décharge de la capacité est notamment souhaitable quand la capacité est configurée pour stocker une quantité importante d'énergie, par exemple au moins 0,2 joules, voire au moins 100 joules, par exemple 320 joules, la capacité ayant alors, par exemple, une valeur supérieure à 625 nF, par exemple égale à 1 mF, et étant destinée à être chargée à une tension DC d'une ou plusieurs centaines de volts, par exemple une tension de 800 V. Une telle capacité est par exemple prévue dans des véhicules électriques ou dans des chargeurs de batterie de véhicules électriques.

### Résumé de l'invention

Il existe un besoin d'améliorer au moins certains aspects des dispositifs de décharge d'une capacité, notamment dans le cas où la capacité est destinée à stocker une quantité importante d'énergie, par exemple lorsque cette capacité appartient à un véhicule électrique ou à un chargeur de batterie d'un véhicule électrique.

Un mode de réalisation pallie tout ou partie des inconvénients des dispositifs connus de décharge d'une capacité.

Un mode de réalisation prévoit un dispositif de décharge d'une capacité comprenant :
un composant résistif à valeur sélectionnable parmi au moins trois valeurs, destiné à être connecté en parallèle de la capacité ; et
un circuit configuré pour sélectionner la valeur du composant.

Selon un mode de réalisation, pendant une décharge de la capacité, le circuit est configuré pour sélectionner des valeurs successives décroissantes parmi lesdites au moins trois valeurs.

Selon un mode de réalisation, pendant une décharge de la capacité, le circuit est configuré pour sélectionner, parmi lesdites au moins trois valeurs, une valeur suivante du composant quand un niveau de décharge de la capacité atteint un seuil associé à ladite valeur suivante.

Selon un mode de réalisation, le circuit est configuré pour déterminer le niveau de décharge de la capacité à partir d'une durée écoulée depuis le début de la décharge.

Selon un mode de réalisation, le circuit est configuré pour déterminer le niveau de décharge de la capacité à partir d'une tension aux bornes de la capacité.

Selon un mode de réalisation, le composant comprend des éléments résistifs et des interrupteurs, de préférence des thyristors, reliés entre eux entre une première borne du composant et une deuxième borne du composant, le circuit étant configuré pour commander chacun desdits interrupteurs du composant.

Selon un mode de réalisation, les éléments résistifs et les interrupteurs sont reliés entre eux de sorte que chacune desdites au moins trois valeurs est déterminée par une combinaison correspondante d'états desdits interrupteurs.

Selon un mode de réalisation, les éléments résistifs et les interrupteurs sont configurés pour que le composant corresponde à un circuit ouvert lorsque tous les interrupteurs sont ouverts.

Selon un mode de réalisation, les éléments résistifs et les interrupteurs sont configurés pour que, pendant une décharge de la capacité, chaque sélection d'une valeur du composant résulte d'une fermeture d'un desdits interrupteurs associé à cette valeur.

Selon un mode de réalisation, pendant une décharge de la capacité, le circuit est en outre configuré pour conditionner une sélection d'une valeur suivante du composant à l'état fermé de l'interrupteur associé à la valeur courante du composant.

Selon un mode de réalisation, le composant comprend autant de branches en parallèle entre les première et deuxième bornes du composant que d'éléments résistifs, chaque branche comprenant un des éléments résistifs en série avec un des interrupteurs.

Selon un mode de réalisation, les éléments résistifs et un premier desdits interrupteurs sont en série entre les première et deuxième bornes du composant, chacun desdits interrupteurs à l'exception du premier interrupteur étant configuré pour court-circuiter un desdits éléments résistifs à l'état fermé.

Selon un mode de réalisation, le circuit est configuré pour recevoir une information indiquant que la capacité doit être déchargée.

Selon un mode de réalisation, le composant résistif est configuré pour correspondre à un circuit ouvert lorsque sa valeur maximale est sélectionnée.

Selon un mode de réalisation, en l'absence d'indication que la capacité doit être déchargée, le dispositif est configuré pour que la valeur maximale du composant soit sélectionnée.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de manière schématique un exemple d'un dispositif du type auquel s'appliquent les modes de réalisation décrits ;
la figure 2 représente, de manière schématique, un exemple d'un dispositif comprenant un circuit de décharge d'une capacité selon un mode de réalisation ;
la figure 3 est une courbe illustrant l'évolution d'une tension aux bornes de la capacité du dispositif de la figure 2 selon un mode de fonctionnement ;
la figure 4 représente, de manière schématique, un exemple d'un dispositif comprenant un circuit de décharge d'une capacité selon un autre mode de réalisation ; et
la figure 5 représente, de manière schématique et sous la forme de blocs, un exemple d'un dispositif comprenant un circuit de décharge d'une capacité selon encore un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers systèmes et applications dans lesquels peut être prévu un circuit de décharge d'une capacité n'ont pas été détaillés, les modes de réalisation décrits étant compatibles avec ces systèmes et applications usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la suite de la description, une même référence est utilisée pour désigner un composant résistif ou capacitif et la valeur de ce composant respectivement résistif ou capacitif.

Dans la suite de la description, on considère que la résistance d'un interrupteur à l'état fermé est nulle ou négligeable.

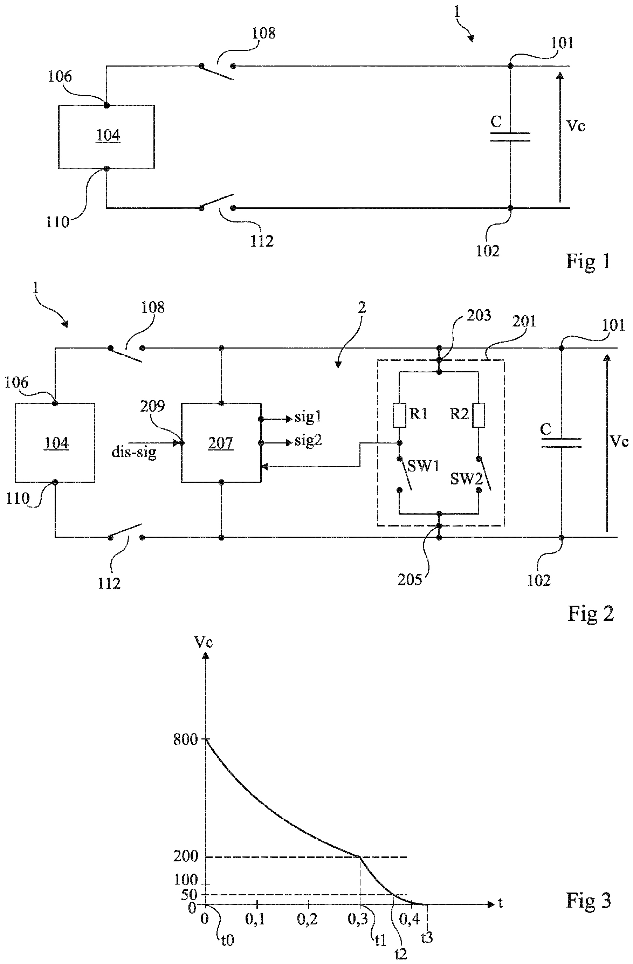

La figure 1 représente de manière schématique un exemple d'un dispositif 1 du type auquel s'appliquent les modes de réalisation décrits.

Le dispositif 1 comprend une capacité C connectée entre un noeud 101 et un noeud 102.

Le dispositif 1 comprend en outre une source d'alimentation 104, par exemple un convertisseur de puissance ou une batterie telle que la batterie d'un véhicule électrique. La source d'alimentation 104 comprend une première borne 106 reliée au noeud 101 par l'intermédiaire d'un interrupteur 108, et une borne 110 reliée au noeud 102 par l'intermédiaire d'un interrupteur 112. Dit autrement, l'interrupteur 108 est connecté entre la borne 106 et le noeud 101, l'interrupteur 112 étant connecté entre la borne 110 et le noeud 102.

La source d'alimentation est configurée pour charger la capacité C à une tension continue Vc lorsque les interrupteurs 108 et 112 sont fermés. Dit autrement, en régime statique ou permanent, la tension Vc est disponible entre les électrodes de la capacité C, c'est-à-dire dans cet exemple entre les noeuds 101 et 102.

Les noeuds 101 et 102 sont par exemple connectés ou destinés à être connectés à une batterie non représentée, le dispositif 1, et en particulier la source d'alimentation 104, servant alors à recharger la batterie, la source d'alimentation 104 pouvant elle-même être une batterie.

Lorsque le dispositif 1 est mis à l'arrêt, par exemple lorsque la liaison électrique entre les noeuds 101 et 102 et la batterie est interrompue, l'énergie accumulée dans la capacité C est alors égale à 0,5*C*Vc². A titre d'exemple, pour une capacité C de 1 mF et une tension Vc de 800 V, l'énergie dans la capacité C est alors de 320 J, et peut entraîner la mort d'une personne qui toucherait l'un et/ou l'autre des noeuds 101 et 102. Les exemples de valeurs ci-dessus correspondent par exemple au cas où la capacité C est une capacité de liaison-continu ("DC-link capacitor") qui se trouve entre deux étages de conversion de puissance, par exemple après un premier étage de conversion de puissance chargeant la capacité C à partir d'une batterie d'un véhicule électrique, et un deuxième étage de conversion de puissance alimentant des moteurs de traction du véhicule électrique à partir de la tension aux bornes de la capacité C. Dans d'autres exemples, le dispositif 1 est un chargeur de batterie d'un véhicule électrique.

Il est donc souhaitable de permettre une décharge de la capacité C, ou, dit autrement, d'évacuer, ou dissiper, l'énergie qui y est accumulée.

Selon l'application, des contraintes de décharge de la capacité C peuvent être définies. Ces contraintes correspondent par exemple à la valeur maximale que doit avoir la tension Vc après l'écoulement d'une durée donnée depuis la mise à l'arrêt, volontaire ou non, du dispositif 1. Dans le domaine des véhicules électriques, des normes peuvent définir ces contraintes de décharge de la capacité C, par exemple les normes ISO26262, ISO6469 et ISO17409. Dans le domaine des véhicules électriques, il est par exemple souhaitable que la tension Vc ait une valeur inférieure à 60 V moins de 1 ou 10 secondes maximum après l'arrêt du dispositif 1.

Pour décharger la capacité C, on pourrait penser à connecter, entre les noeuds 101 et 102, une association en série d'une résistance R et d'un interrupteur. L'interrupteur serait alors commandé pour se fermer lorsque la capacité C doit être déchargée, de sorte que l'énergie stockée dans la capacité soit dissipée par la résistance R. La résistance R devrait alors être capable de supporter la tension Vc au début de la décharge, et donc avoir une valeur relativement importante, notamment afin de limiter la puissance instantanée en début de décharge, c'est-à-dire notamment afin de limiter la valeur du pic de courant en début de décharge. Dans le même temps, pour que la décharge soit la plus rapide possible, la résistance R devrait avoir une valeur relativement faible. En effet, plus cette résistance R a une valeur élevée, plus la constante de temps de la décharge, égale à R*C, est importante et plus la puissance qui peut être dissipée par la résistance R est faible.

En outre, par exemple dans le domaine des véhicules électriques, les valeurs disponibles pour une telle résistance de décharge de la capacité C sont peu nombreuses et ne permettent généralement pas de respecter les contraintes de décharge. On pourrait alors penser à associer plusieurs de ces résistances en série et/ou en parallèle pour obtenir une résistance équivalente ayant une valeur permettant le respect des contraintes de décharge. Toutefois, cela ne serait pas toujours possible et résulterait en outre en un dispositif relativement encombrant.

Pour décharger la capacité C, en particulier dans le domaine des véhicules électriques, on pourrait également penser à connecter un commutateur à usage unique, typiquement un commutateur pyrotechnique, en parallèle de la capacité C. Toutefois, un tel commutateur ne pourrait être utilisé qu'une seule fois pour décharger la capacité C, par exemple suite à un accident impliquant un véhicule électrique muni de la capacité C. Toutefois, l'usage d'un tel commutateur présente des inconvénients inhérents à l'utilisation d'un composant à usage unique (maintenance, remplacement, etc.).

L'inventeur propose ici un dispositif de décharge d'une capacité comprenant un composant résistif à valeur sélectionnable parmi au moins trois valeurs, destiné à être connecté en parallèle de la capacité, et un circuit configuré pour sélectionner la valeur du composant. Plus précisément, lors d'une décharge de la capacité, le circuit est configuré pour sélectionner des valeurs successives décroissantes du composant. Ainsi, la décharge de la capacité est plus lente au début de la décharge, quand la tension aux bornes de la capacité est encore relativement élevée, et plus rapide à la fin de la décharge, quand cette tension est plus faible. En outre, tant qu'il n'est pas utile de décharger la capacité, le circuit sélectionne une valeur maximale ou par défaut du composant pour laquelle le composant résistif se comporte comme un circuit ouvert. Ainsi, tant qu'il n'est pas utile de décharger la capacité, le composant résistif ne modifie pas le fonctionnement du dispositif comprenant la capacité.

La figure 2 représente, de manière schématique, un exemple d'un dispositif comprenant un circuit ou dispositif de décharge d'une capacité selon un mode de réalisation. Plus particulièrement, la figure 2 représente le dispositif 1 de la figure 1 muni d'un dispositif 2 de décharge de la capacité C selon un mode de réalisation. Seules les différences entre le dispositif 1 de la figure 1 et le dispositif 1 de la figure 2 sont ici détaillées, ou, dit autrement, seul le dispositif 2 est ici détaillé.

Le dispositif 2 comprend un composant résistif 201 connecté ou destiné à être connecté en parallèle de la capacité C. Dit autrement, le composant 201 comprend une première borne 203 connectée ou destinée à être connectée au noeud 101, et une deuxième borne 205 connectée ou destinée à être connectée au noeud 102. La valeur de la résistance du composant 201, mesurée entre ses bornes 203 et 205, est sélectionnable parmi au moins trois valeurs. L'une de ces valeurs, dite valeur maximale ou par défaut, correspond au cas où le composant résistif 201 est équivalent, entre ses bornes 203 et 205, à un circuit ouvert ne comprenant pas de chemin conducteur entre les bornes 203 et 205.

Dans le mode de réalisation illustré par la figure 2, le composant 201 comprend plusieurs branches connectées en parallèle les unes des autres, entre les bornes 203 et 205 du composant 201. Chaque branche comprend un interrupteur connecté en série avec une résistance ou élément résistif, entre les bornes 203 et 205. Lorsque tous les interrupteurs du composant 201 sont ouverts, en dehors d'une phase de décharge de la capacité C, le composant 201 est à sa valeur par défaut et est équivalent à un circuit ouvert. Lorsque la capacité C doit être déchargée, une première branche du composant 201 est activée en fermant l'interrupteur de cette première branche, d'où il résulte que le composant 201 est alors équivalent à la résistance de cette première branche. L'activation de cette première branche du composant 201 marque le début d'une décharge de la capacité C. Selon un mode de réalisation, pendant la décharge de la capacité C, les autres branches du composant 201 sont ensuite activées les unes après les autres, en fermant les uns après les autres les interrupteurs de ces branches respectives. Chaque activation d'une nouvelle branche, autre que la première, revient à relier la résistance de cette nouvelle branche en parallèle des résistances des branches déjà activées, donc à sélectionner les unes après les autres des valeurs de résistance décroissantes du composant 201. Dans un tel mode de réalisation, pendant la décharge de la capacité C, chaque sélection d'une valeur de résistance du composant 201 résulte donc de la fermeture d'un des interrupteurs du composant 201, cet interrupteur étant alors dit associé à cette valeur du composant 201.

Dans l'exemple de la figure 2, le composant 201 comprend deux branches en parallèle, à savoir une première branche comprenant une résistance R1 en série avec un interrupteur SW1, et une deuxième branche comprenant une résistance R2 en série avec un interrupteur SW2. Ainsi, lorsque tous les interrupteurs SW1 et SW2 du composant 201 sont ouverts, le composant 201 est équivalent à un circuit ouvert, lorsque les interrupteurs SW1 et SW2 sont respectivement fermé et ouvert, le composant 201 a la valeur R1 et, lorsque les interrupteurs SW1 et SW2 sont fermés, le composant 201 a une valeur égale à R1*R2/(R1+R2). Le composant 201 a alors bien une valeur sélectionnable parmi au moins trois valeurs. Bien que le composant 201 puisse aussi prendre la valeur R2 (interrupteur SW1 ouvert et interrupteur SW2 fermé), selon un mode de réalisation, cette valeur ne sera pas sélectionnée pendant la décharge de la capacité C.

Le dispositif 2 comprend en outre un circuit 207 configuré pour commander le composant 201. Dit autrement, le circuit 207 est configuré pour sélectionner la valeur du composant 201. Dit encore autrement, le circuit 207 est configuré pour commander l'état ouvert ou fermé de chaque interrupteur SW1, SW2 du composant 201. Ainsi, le circuit 207 est configuré pour fournir un signal de commande à chaque interrupteur SW1, SW2 du composant 201, par exemple un signal sig1 de commande de l'interrupteur SW1 et un signal sig2 de commande de l'interrupteur SW2.

Bien que cela ne soit pas représenté ici, le circuit 207 comprend de préférence un circuit de commande rapprochée (« driver » en anglais) pour chaque interrupteur du composant 201, chaque circuit de commande rapprochée étant alors configuré pour fournir le signal de commande de l'interrupteur auquel il est associé. Dans l'exemple de la figure 2, le circuit 207 comprend de préférence un circuit de commande rapprochée (non représenté) fournissant le signal sig1 à l'interrupteur SW1, et un autre circuit de commande rapprochée (non représenté) fournissant le signal sig2 à l'interrupteur SW2. La mise en œuvre de ces circuits de commande rapprochée est à la portée de la personne du métier.

Le circuit 207 est configuré pour commander le composant 201 à partir d'une indication que la capacité C doit ou non être déchargée. Le circuit 207 comprend alors une entrée 209 configurée pour recevoir une indication que la capacité C doit ou non être déchargée. De préférence, tant que le circuit 207 ne reçoit pas d'indication que la capacité C doit être déchargée, le circuit 207 sélectionne la valeur maximale ou par défaut du composant 201, ou, dit autrement, le circuit 207 commande le composant 201 pour qu'il soit équivalent à un circuit ouvert.

Dans l'exemple de la figure 2, l'entrée 209 est configurée pour recevoir un signal binaire dis-sig dont un premier état binaire indique que la capacité C n'a pas à être déchargée, et dont un deuxième état binaire indique que la capacité doit être déchargée. A titre d'exemple, le signal dis-sig est commuté à son deuxième état à chaque détection qu'une batterie connectée aux noeuds 101 et 102 est déconnectée de ces noeuds 101 et 102, ou à chaque détection d'un accident d'un véhicule électrique comprenant le dispositif 2 et la capacité C.

En outre, pendant une décharge de la capacité C, le circuit 207 est configuré pour sélectionner des valeurs de résistance successives décroissantes du composant 201. A titre d'exemple, dès que le circuit 207 reçoit une indication que la capacité C doit être déchargée, le circuit 207 sélectionne une valeur du composant 201 autre que sa valeur maximale pour laquelle il est équivalent à un circuit ouvert, ce qui marque le début de la décharge de la capacité C. Puis, pendant la décharge, le circuit 207 sélectionne successivement des valeurs de résistance décroissantes du composant 201. Dans l'exemple particulier de la figure 2, lorsque le circuit 207 reçoit l'indication que la capacité C doit être déchargée, le circuit commande la sélection de la valeur R1 du composant 201 en fermant l'interrupteur SW1 associé à cette valeur, puis, pendant la décharge, le circuit 207 commande la sélection de la valeur R1*R2/(R1+R2) du composant 201 en fermant l'interrupteur SW2 associé à cette valeur.

Pendant une décharge de la capacité C, le circuit 207 est en outre configuré pour sélectionner les valeurs du composant 201 en fonction d'un état ou niveau de décharge de la capacité C. Dit autrement, pendant la décharge de la capacité C, le circuit 207 est configuré pour sélectionner une valeur suivante du composant 201 quand le niveau de décharge de la capacité C atteint un seuil associé à cette valeur suivante. Dit encore autrement, pendant la décharge de la capacité C, le circuit 207 est configuré pour commander une commutation d'une valeur courante du composant 201 à une valeur suivante du composant 201 lorsque le niveau de décharge de la capacité C atteint un seuil associé à cette valeur suivante.

Le circuit 207 est donc configuré pour déterminer un état ou niveau de décharge de la capacité C. Le circuit 207 est en outre configuré pour comparer ce niveau de décharge à un ou plusieurs seuils de décharge de la capacité C.

Selon le mode de réalisation illustré en figure 2, le circuit 207 est configuré pour déterminer ou évaluer le niveau de décharge de la capacité C à partir de la tension Vc aux bornes de cette dernière. Le circuit 207 est alors relié, de préférence connecté, à chacun des noeuds 101 et 102 pour recevoir la tension Vc ou une tension représentative de la tension Vc. Plus précisément, pour déterminer le niveau de décharge de la capacité C, le circuit 207 est configuré pour comparer la tension Vc à un ou plusieurs seuils de tension déterminant chacun un seuil de décharge de la capacité C. Pendant une décharge de la capacité C, le circuit 207 est alors configuré pour commander la commutation d'une valeur courante du composant 201 à une valeur suivante plus faible du composant 201 lorsque la tension Vc atteint le seuil de tension associé à cette valeur suivante, par exemple lorsque la tension Vc devient inférieure à ce seuil de tension.

Selon un autre mode de réalisation non illustré, le circuit 207 est configuré pour déterminer ou évaluer le niveau de décharge de la capacité C à partir d'une durée écoulée depuis le début de la décharge de la capacité C. Plus précisément, pour déterminer ou évaluer le niveau de décharge de la capacité C, le circuit 207 est configuré pour comparer la durée écoulée depuis le début de la décharge à un ou plusieurs seuils temporels déterminant chacun un seuil de décharge de la capacité C. Pendant une décharge de la capacité C, le circuit 207 est alors configuré pour commander le passage d'une valeur courante du composant 201 à une valeur suivante plus faible du composant 201 lorsque la durée écoulée depuis le début de la décharge atteint le seuil temporel associé à cette valeur suivante, par exemple lorsque la durée écoulée depuis le début de la décharge devient supérieure à ce seuil temporel.

Selon un mode de réalisation, pendant une décharge de la capacité C, la sélection d'une valeur suivante du composant 201 est conditionnée à l'état fermé de l'interrupteur associé à la valeur courante du composant 201. En reprenant l'exemple particulier de la figure 2, quand la valeur courante du composant 201 est R1 (SW1 fermé, SW2 ouvert) et que la capacité C se décharge, la sélection de la valeur suivante R1*R2/(R1+R2) du composant 201 est conditionnée à l'état fermé de l'interrupteur SW1. La personne du métier est en mesure de mettre en œuvre la vérification, par le circuit 207, qu'un interrupteur donné du composant 201 est à l'état fermé, par exemple en prévoyant que le circuit 207 soit relié, de préférence connecté, à chacune des bornes de conduction de cet interrupteur comme cela est représenté en figure 2 pour l'interrupteur SW1.

Bien que l'on ait décrit ci-dessus en relation avec la figure 2 un exemple de composant 201 ne comprenant que deux branches en parallèle comportant chacune un élément résistif en série avec un interrupteur, la personne du métier est en mesure de généraliser cet exemple à un nombre quelconque de branches en parallèle supérieur ou égal à trois.

La figure 3 est une courbe illustrant l'évolution de la tension Vc aux bornes de la capacité C du dispositif de la figure 2 selon un mode de fonctionnement. Dans l'exemple de la figure 3, la capacité C est chargée à une tension Vc égale à 800 V, la capacité C est égale à 1 mF, la résistance R1 est égale à 231 ohms, et la résistance R2 est égale à 47 ohms. En outre, lors d'une décharge de la capacité C, la sélection de la valeur R1*R2/(R1+R2) du composant 201 par le circuit 207 est mise en œuvre lorsque le niveau de décharge de la capacité C atteint un seuil pour lequel la tension Vc aux bornes de la capacité C est égale ou inférieure à 200 V.

Avant un instant t0, la capacité C est chargée à la tension Vc égale à 800 V. En outre, le composant 201 est à sa valeur maximale ou par défaut et est donc équivalent à un circuit ouvert (interrupteurs SW1 et SW2 ouverts).

Suite à une déconnexion de la source d'alimentation 104 du dispositif 1, par exemple suite à une ouverture des interrupteurs 108 et/ou 112, le circuit 207 reçoit une indication que la capacité C doit être déchargée, et, à l'instant t0, le circuit 207 sélectionne la valeur R1 du composant 201 en fermant l'interrupteur SW1 associé à cette valeur. La décharge de la capacité C débute à l'instant t0 et la tension Vc décroît à partir de l'instant t0.

A un instant t1 suivant, sensiblement égal à t0+0,3 s, la tension Vc aux bornes de la capacité C devient inférieure à 200 V, le seuil de décharge associé à la valeur R1*R2/(R1+R2) du composant 201. Cela est détecté par le circuit 207, par exemple au moyen d'un comparateur de la tension Vc à ce seuil. Le circuit 207 sélectionne alors la valeur R1*R2/(R1+R2) du composant 201 en fermant l'interrupteur SW2 associé à cette valeur. Il en résulte que, à partir de l'instant t1, la décharge de la capacité C est plus rapide que si le composant 201 était resté à la valeur R1.

A un instant t3 suivant, sensiblement égal à t0+0,42 s, la capacité C est complètement déchargée.

Dans cet exemple, on constate que, à partir d'un instant t2 sensiblement égal à t0+0,37 s, la tension Vc aux bornes de la capacité C est inférieure à 50 V. L'exemple de la figure 3 est donc compatible avec une décharge de la capacité C telle que la tension Vc soit inférieure à 50 V moins de 500 ms après le début de la décharge, ce qui n'aurait pas été le cas si le composant 201 avait conservé une valeur constante tout au long de la décharge.

Dans l'exemple de la figure 3, le seuil en tension de 200 V associé à la valeur R1*R2/(R1+R2) du composant 201 peut être remplacé par un seuil temporel égal à 0,3 s. Dans ce cas, lorsqu'une durée de 0,3 s s'est écoulée depuis l'instant t0 de début de la décharge de la capacité C, le circuit 207 commande, à l'instant t1=t0+0,3 s, la fermeture de l'interrupteur SW2 pour sélectionner la valeur R1*R2/(R1+R2) associée à ce seuil temporel.

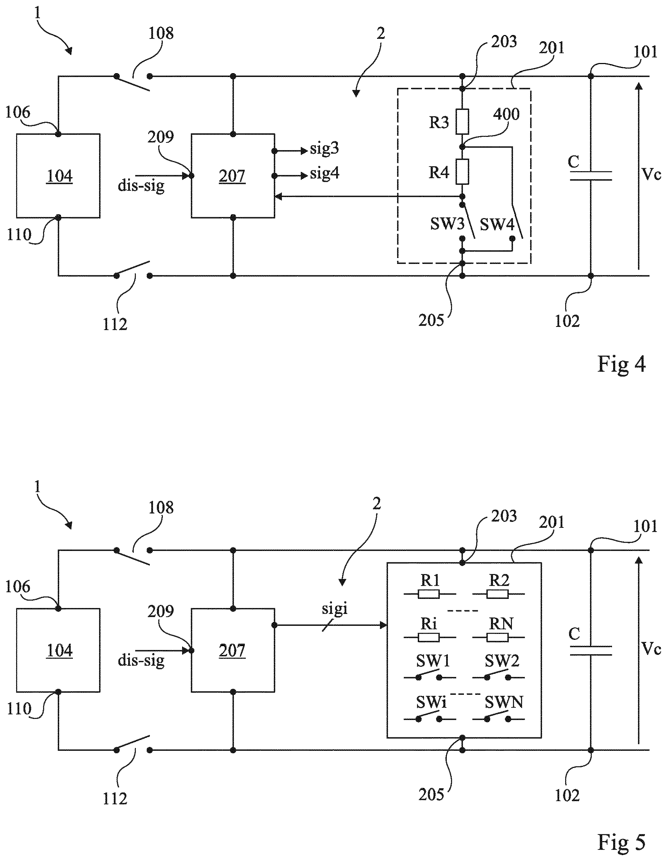

La figure 4 représente, de manière schématique, un exemple du dispositif 1 comprenant un dispositif 2 de décharge de la capacité C selon un autre mode de réalisation. Seules les différences entre le dispositif 2 de la figure 2 et le dispositif 2 de la figure 4 sont ici détaillées.

Le mode de réalisation du dispositif 2 de la figure 4 diffère de celui de la figure 2 essentiellement en ce que le composant 201 qu'il comprend ne comprend pas des branches en parallèle comportant chacune un interrupteur en série avec une résistance. En effet, dans le mode de réalisation de la figure 4, le composant 201 comprend, entre ses bornes 203 et 205, une association en série d'au moins deux résistances ou éléments résistifs et d'un interrupteur et, pour chacune des résistances sauf une, un interrupteur configuré pour court-circuiter, à l'état fermé, cette résistance. Lorsque tous les interrupteurs du composant 201 sont ouverts, en dehors d'une phase de décharge de la capacité C, le composant 201 est alors équivalent à un circuit ouvert. Lorsque la capacité C doit être déchargée, l'interrupteur en série avec les résistances est commuté à l'état fermé par le circuit 207, d'où il résulte que le composant 201 est alors équivalent à somme de ces résistances. Selon un mode de réalisation, pendant la décharge de la capacité C, les autres interrupteurs du composant 201 sont ensuite fermés les uns après les autres par le circuit 207. Chaque fermeture d'un de ces autres interrupteurs revient à retirer la résistance qu'il court-circuite du composant 201, et donc à sélectionner une valeur plus faible du composant 201. Dans un tel mode de réalisation, lors de la décharge de la capacité C, chaque sélection d'une valeur du composant 201 résulte de la fermeture d'un des interrupteurs du composant 201, cet interrupteur étant alors dit associé à cette valeur.

Dans l'exemple de la figure 4, le composant 201 comprend deux résistances R3 et R4 en série avec un interrupteur SW3, et un interrupteur SW4 configuré pour court-circuiter la résistance R4 quand l'interrupteur SW4 est à l'état fermé. L'interrupteur SW4 est par exemple connecté entre la borne 205 et un noeud de connexion 400 de la résistance R3 à la résistance R4, bien qu'il puisse également être connecté aux bornes respectives de la résistance R4. Lorsque tous les interrupteurs SW3 et SW4 sont ouverts, le composant 201 est équivalent à un circuit ouvert, lorsque les interrupteurs SW3 et SW4 sont respectivement fermé et ouvert, le composant 201 a la valeur R3 + R4 et, lorsque les interrupteurs SW3 et SW4 sont fermés, le composant 201 a une valeur égale à R3. Le composant 201 a donc bien une valeur sélectionnable parmi au moins trois valeurs.

Comme en figure 2, le circuit 207 du dispositif 2 est configuré pour commander le composant 201, c'est-à-dire pour sélectionner la valeur du composant 201. Dit autrement, le circuit 207 est configuré pour commander l'état ouvert ou fermé de chaque interrupteur du composant 201. Ainsi, le circuit 207 est configuré pour fournir un signal de commande à chaque interrupteur du composant 201. Dans l'exemple de la figure 4, le circuit 207 est configuré pour fournir un signal sig3 de commande de l'interrupteur SW3, et un signal sig4 de commande de l'interrupteur SW4.

Comme en figure 2, le circuit 207 comprend de préférence un circuit de commande rapprochée (« driver » en anglais) pour chaque interrupteur du composant 201, chaque circuit de commande rapprochée étant alors configuré pour fournir le signal de commande de l'interrupteur du circuit 201 auquel il est associé.

Comme en figure 2, le circuit 207 est configuré pour commander le composant 201 à partir d'une indication que la capacité C doit ou non être déchargée, et comprend l'entrée 209 configurée pour recevoir une indication que la capacité C doit ou non être déchargée, l'entrée 209 étant par exemple configurée pour recevoir le signal dis-sig. De préférence, tant que le circuit 207 ne reçoit pas d'indication que la capacité C doit être déchargée, le circuit 207 sélectionne la valeur maximale du composant 201, ou, dit autrement, le circuit 207 commande le composant 201 pour qu'il soit équivalent à un circuit ouvert.

Comme en figure 2, pendant une décharge de la capacité C, le circuit 207 est configuré pour sélectionner des valeurs successives décroissantes du composant 201. A titre d'exemple, dès que le circuit 207 reçoit une indication que la capacité C doit être déchargée, le circuit 207 sélectionne une valeur du composant 201 autre que sa valeur maximale ou par défaut pour laquelle il est équivalent à un circuit ouvert, ce qui marque le début de la décharge de la capacité C. Puis, pendant la décharge, le circuit 207 sélectionne successivement des valeurs décroissantes du composant 201. Dans l'exemple particulier de la figure 4, lorsque le circuit 207 reçoit l'indication que la capacité C doit être déchargée, le circuit commande la sélection de la valeur R3 + R4 du composant 201 en fermant l'interrupteur SW3 associé à cette valeur, puis, pendant la décharge, le circuit 207 commande la sélection de la valeur R3 du composant 201 en fermant l'interrupteur SW4 associé à cette valeur.

Comme en figure 2, pendant une décharge de la capacité C, le circuit 207 est en outre configuré pour sélectionner les valeurs du composant 201 en fonction d'un état ou niveau de décharge de la capacité C. Le circuit 207 est donc configuré pour déterminer un état ou niveau de décharge de la capacité C.

Selon le mode de réalisation illustré en figure 4, le circuit 207 est configuré pour déterminer ou évaluer le niveau de décharge de la capacité C à partir de la tension Vc aux bornes de cette dernière.

Selon un autre mode de réalisation non illustré, le circuit 207 est configuré pour déterminer ou évaluer le niveau de décharge de la capacité C à partir d'une durée écoulée depuis le début de la décharge de la capacité C.

Selon un mode de réalisation, la sélection d'une valeur suivante du composant 201, pendant une décharge de la capacité C, est conditionnée à l'état fermé de l'interrupteur associé à la valeur courante du composant 201. En reprenant l'exemple particulier de la figure 4, alors que la valeur courante du composant 201 est R3 + R4 (SW3 fermé, SW4 ouvert) et que la capacité C se décharge, la sélection de la valeur suivante R3 du composant 201 est conditionnée à l'état fermé de l'interrupteur SW3. La personne du métier est en mesure de mettre en œuvre la vérification, par le circuit 207, qu'un interrupteur donné du composant 201 est à l'état fermé, par exemple en prévoyant que le circuit 207 soit relié, de préférence connecté, à chacune des bornes de conduction de cet interrupteur comme cela est représenté en figure 4 pour l'interrupteur SW3.

Bien que l'on ait décrit ci-dessus en relation avec la figure 4 un exemple de composant 201 ne comprenant que deux résistances R3 et R4 en série avec un interrupteur SW3, et un interrupteur SW4 configuré pour court-circuiter la résistance R4, la personne du métier est en mesure de généraliser cet exemple à un nombre quelconque de résistances en série avec un interrupteur, chacune de ces résistances en série à l'exception d'une de ces résistances étant associée à un interrupteur configuré pour la court-circuiter à l'état fermé.

A titre d'exemple de fonctionnement, dans le cas où :
- la capacité C est égale à 1 mF ;
- la capacité C est chargée à une tension Vc égale à 800 V ;
- la résistance R3 est égale à 39 ohms ;
- la résistance R4 est égale à 192 ohms ; et
- la sélection de la valeur R3 du composant 201 par le circuit 207 est mise en œuvre lorsque le niveau de décharge de la capacité C atteint un seuil pour lequel la tension Vc aux bornes de la capacité C est égale à 200 V, on obtient le même fonctionnement que celui décrit en relation avec la figure 3.

La figure 5 représente, de manière schématique et sous la forme de blocs, un exemple du dispositif 1 comprenant un dispositif 2 de décharge d'une capacité selon encore un autre mode de réalisation. Seules les différences entre les dispositifs 2 des figures 2 et 4 et le dispositif 2 de la figure 5 sont ici détaillées.

Le dispositif 2 de la figure 5 comprend N résistances ou éléments résistifs Ri (R1, R2, ..., Ri, ..., RN) et N interrupteurs SWi (SW1, SW2, ..., SWi, ..., SWN), avec i entier allant de 1 à N, et N entier supérieur ou égal à deux. Le mode de réalisation du dispositif 2 de la figure 5 diffère de ceux des figures 2 et 4 essentiellement par la façon dont les résistances Ri et les interrupteurs SWi sont connectés entre eux, entre les bornes 203 et 205.

Dans le mode de réalisation de la figure 5, l'interconnexion des résistances Ri et des interrupteurs SWi du composant 201 est telle que, lorsque tous les interrupteurs SWi sont ouverts, en dehors d'une phase de décharge de la capacité C, le composant 201 est équivalent à un circuit ouvert. En outre, cette interconnexion est telle que, lorsque la capacité C doit être déchargée, l'interrupteur SW1 est commuté à l'état fermé par le circuit 207, le composant 201 ayant alors une première valeur associée à l'interrupteur SW1. En outre, l'interconnexion des résistances Ri et des interrupteurs SWi est telle que, en fermant les uns après les autres les interrupteurs SWi autres que l'interrupteur SW1, c'est-à-dire en fermant l'interrupteur SW2, puis l'interrupteur SW3, etc, jusqu'à l'interrupteur SWN, le composant 201 prend des valeurs décroissantes. Chacune de ces valeurs décroissantes est associée à un interrupteur SWi d'indice i donné dont la fermeture, en plus des interrupteurs déjà fermés pour la valeur courante du composant 201, provoque la sélection d'une valeur suivante du composant 201, associée à cet interrupteur. Dit autrement, lors d'une décharge de la capacité C, chaque sélection d'une valeur du composant 201 résulte de la fermeture d'un des interrupteurs du composant 201, associé à cette valeur. A titre d'exemple, pour N égal à quatre, le composant 201 est équivalent à un circuit ouvert quand tous les interrupteurs SWi sont ouverts, et prend, pendant la décharge de la capacité C, quatre valeurs successives décroissantes, chacune associée à un interrupteur SWi distinct.

Comme en figure 2, le circuit 207 du dispositif 2 est configuré pour commander le composant 201, c'est-à-dire pour sélectionner la valeur du composant 201. Dit autrement, le circuit 207 est configuré pour commander l'état ouvert ou fermé de chaque interrupteur SWi du composant 201. Ainsi, le circuit 207 est configuré pour fournir un signal de commande à chaque interrupteur du composant 201. Dans l'exemple de la figure 4, le circuit 207 est configuré pour fournir N signaux sigi, avec i entier allant de 1 à N, ces N signaux étant représentés sous la forme d'un bus en figure 5.

Comme en figure 2, le circuit 207 comprend de préférence un circuit de commande rapprochée (« driver » en anglais) pour chaque interrupteur du composant 201, chaque circuit de commande rapprochée étant alors configuré pour fournir le signal de commande de l'interrupteur du circuit 201 auquel il est associé.

Comme en figure 2, le circuit 207 est configuré pour commander le composant 201 à partir d'une indication que la capacité C doit ou non être déchargée, et comprend l'entrée 209 configurée pour recevoir une indication que la capacité C doit ou non être déchargée, l'entrée 209 étant par exemple configurée pour recevoir le signal dis-sig. De préférence, tant que le circuit 207 ne reçoit pas d'indication que la capacité C doit être déchargée, le circuit 207 sélectionne la valeur maximale du composant 201, ou, dit autrement, le circuit 207 commande le composant 201 pour qu'il soit équivalent à un circuit ouvert.

Comme en figure 2, pendant une décharge de la capacité C, le circuit 207 est configuré pour sélectionner des valeurs successives décroissantes du composant 201. A titre d'exemple, dès que le circuit 207 reçoit une indication que la capacité C doit être déchargée, le circuit 207 sélectionne une valeur du composant 201 autre que sa valeur maximale pour laquelle il est équivalent à un circuit ouvert, ce qui marque le début de la décharge de la capacité C. Puis, pendant la décharge, le circuit 207 sélectionne successivement des valeurs décroissantes du composant 201. Dans l'exemple particulier de la figure 5, lorsque le circuit 207 reçoit l'indication que la capacité C doit être déchargée, le circuit commande la sélection d'une première valeur du composant 201 en fermant l'interrupteur SW1 associé à cette valeur, puis, pendant la décharge, le circuit 207 commande la sélection de valeurs successives décroissantes du composant 201 en fermant les uns après les autres les interrupteurs SW2, SW3, ..., SWi, ..., SWN.

Comme en figure 2, pendant une décharge de la capacité C, le circuit 207 est en outre configuré pour sélectionner les valeurs du composant 201 en fonction d'un état ou niveau de décharge de la capacité C. Le circuit 207 est donc configuré pour déterminer un état ou niveau de décharge de la capacité C.

Selon le mode de réalisation illustré en figure 5, le circuit 207 est configuré pour déterminer ou évaluer le niveau de décharge de la capacité C à partir de la tension Vc aux bornes de cette dernière.

Selon un autre mode de réalisation non illustré, le circuit 207 est configuré pour déterminer ou évaluer le niveau de décharge de la capacité C à partir d'une durée écoulée depuis le début de la décharge de la capacité C.

Selon un mode de réalisation, la sélection d'une valeur suivante du composant 201, pendant une décharge de la capacité C, est conditionnée à l'état fermé de l'interrupteur associé à la valeur courante du composant 201. A titre d'exemple, en figure 5, alors que la valeur courante du composant 201 est celle qui correspond au cas où les interrupteurs SW1 et SW2 sont fermés, et que la capacité C se décharge, la sélection de la valeur suivante du composant 201 en fermant l'interrupteur SW3 est conditionnée à l'état fermé de l'interrupteur SW2. La personne du métier est en mesure de mettre en œuvre la vérification, par le circuit 207, qu'un interrupteur donné du composant 201 est à l'état fermé, par exemple en prévoyant que le circuit 207 soit relié, de préférence connecté, à chacune des bornes de conduction de cet interrupteur, ces connexions n'étant pas représentées en figure 5.

La personne du métier est en mesure, à partir des indications fonctionnelles données ci-dessus, de mettre en œuvre le composant 201, et en particulier de mettre en œuvre l'interconnexion, entre les bornes 203 et 205, des résistances Ri et des interrupteurs SWi.

On comprend que les modes de réalisation du dispositif 2 décrits en relation avec les figures 2 et 4 sont des cas particuliers du mode de réalisation décrit en relation avec la figure 5.

Selon un mode de réalisation des dispositifs 2 décrits en relation avec les figures 2, 4 et 5, les interrupteurs du composant 201 sont mis en œuvre chacun par un redresseur silicium commandé (en anglais « Silicon Controlled Rectifier ») ou SCR ou thyristor. Dans ce cas le signal de commande d'un tel interrupteur est une commande en courant appliquée sur la borne de commande ou gâchette de l'interrupteur. Un avantage de mettre en œuvre les interrupteurs du composant 201 avec des thyristors est qu'ils se réouvrent dès que le courant entre les bornes 203 et 205 s'annule, c'est-à-dire dès que la capacité C s'est entièrement déchargée à travers le composant 201.

Bien que cela n'ait pas été indiqué dans la description faite ci-dessus de modes de réalisation du dispositif 2, on comprend que, pendant une phase de décharge de la capacité C, le composant 201 ne prend que des valeurs discrètes, et plus particulièrement au moins deux valeurs discrètes, le composant prenant en outre, en dehors d'une phase de décharge de la capacité C, une valeur supplémentaire pour laquelle il est équivalent à un circuit ouvert.

Dans la description faite ci-dessus de modes de réalisation du dispositif 2 en relation avec les figures 2 à 5, chaque résistance Ri du composant 201 désigne de préférence une unique résistance ou résistor, bien chaque résistance Ri puisse être mise en œuvre au moyen de n'importe quel élément résistif, par exemple au moyen d'une association en série et/ou en parallèle de plusieurs résistors.

Par ailleurs, bien que l'on ait décrit la prévision d'un dispositif 2 dans le dispositif 1, le dispositif 2 comprenant le circuit 207 et le composant 201 connecté ou destiné à être connecté en parallèle d'une capacité peut être prévu dans tout dispositif connecté ou destiné à être connecté à une capacité qu'il est souhaitable de pouvoir décharger, notamment en respectant des contraintes de décharge. Par exemple, le dispositif 2 est compatible avec une capacité destinée à être chargée à une tension maximale Vc supérieure à 10 V, par exemple supérieure à 50 V, voire supérieure à 100 V.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la personne du métier est en mesure de déterminer les valeurs des résistances du composant 201 en fonction de l'application visée, ainsi que les valeurs des seuils, en tension ou temporels, associés chacun à une des valeurs prises par le composant 201 pendant une phase de décharge d'une capacité en parallèle du composant 201.

## Revendications

1. Dispositif (2) de décharge d'une capacité (C) comprenant :
un composant résistif (201) à valeur sélectionnable parmi au moins trois valeurs, destiné à être connecté en parallèle de la capacité (C) ; et
un circuit (207) configuré pour sélectionner la valeur du composant (201).

2. Dispositif selon la revendication 1, dans lequel, pendant une décharge de la capacité (C), le circuit (201) est configuré pour sélectionner des valeurs successives décroissantes parmi lesdites au moins trois valeurs.

3. Dispositif selon la revendication 2, dans lequel, pendant une décharge de la capacité (C), le circuit (201) est configuré pour sélectionner, parmi lesdites au moins trois valeurs, une valeur suivante du composant quand un niveau de décharge de la capacité (C) atteint un seuil associé à ladite valeur suivante.

4. Dispositif selon la revendication 3, dans lequel le circuit (201) est configuré pour déterminer le niveau de décharge de la capacité (C) à partir d'une durée écoulée depuis le début (t0) de la décharge.

5. Dispositif selon la revendication 3, dans lequel le circuit (201) est configuré pour déterminer le niveau de décharge de la capacité (C) à partir d'une tension (Vc) aux bornes de la capacité (C).

6. Dispositif selon l'une quelconque des revendications 1 à 5, dans lequel le composant (201) comprend des éléments résistifs (R1, R2 ; R3, R4 ; Ri) et des interrupteurs (SW1, SW2 ; SW3, SW4 ; SWi), de préférence des thyristors, reliés entre eux entre une première borne (203) du composant et une deuxième borne (205) du composant, le circuit (207) étant configuré pour commander chacun desdits interrupteurs (SW1, SW2 ; SW3, SW4 ; SWi) du composant (201).

7. Dispositif selon la revendication 6, dans lequel les éléments résistifs (R1, R2 ; R3, R4 ; Ri) et les interrupteurs (SW1, SW2 ; SW3, SW4 ; SWi) sont reliés entre eux de sorte que chacune desdites au moins trois valeurs est déterminée par une combinaison correspondante d'états desdits interrupteurs (SW1, SW2 ; SW3, SW4 ; SWi).

8. Dispositif selon la revendication 6 ou 7, dans lequel les éléments résistifs (R1, R2; R3, R4 ; Ri) et les interrupteurs (SW1, SW2 ; SW3, SW4 ; SWi) sont configurés pour que le composant (201) corresponde à un circuit ouvert lorsque tous les interrupteurs (SW1, SW2 ; SW3, SW4 ; SWi) sont ouverts.

9. Dispositif selon l'une quelconque des revendications 6 à 8, dans lequel les éléments résistifs (R1, R2 ; R3, R4 ; Ri) et les interrupteurs (SW1, SW2 ; SW3, SW4 ; SWi) sont configurés pour que, pendant une décharge de la capacité (C), chaque sélection d'une valeur du composant (201) résulte d'une fermeture d'un desdits interrupteurs (SW1, SW2 ; SW3, SW4 ; SWi) associé à cette valeur.

10. Dispositif selon la revendication 9, dans lequel, pendant une décharge de la capacité (C), le circuit (207) est en outre configuré pour conditionner une sélection d'une valeur suivante du composant (201) à l'état fermé de l'interrupteur associé à la valeur courante du composant (201) .

11. Dispositif selon l'une quelconque des revendications 6 à 10, dans lequel le composant (201) comprend autant de branches en parallèle entre les première (203) et deuxième (205) bornes du composant que d'éléments résistifs (R1, R2), chaque branche comprenant un des éléments résistifs (R1, R2) en série avec un des interrupteurs (SW1, SW2).

12. Dispositif selon l'une quelconque des revendications 6 à 10, dans lequel les éléments résistifs (R3, R4) et un premier (SW3) desdits interrupteurs (SW3, SW4) sont en série entre les première (203) et deuxième (205) bornes du composant (201), chacun desdits interrupteurs à l'exception du premier interrupteur (SW3) étant configuré pour court-circuiter un desdits éléments résistifs (R4) à l'état fermé.

13. Dispositif selon l'une quelconque des revendications 1 à 12, dans lequel le circuit (207) est configuré pour recevoir une information (dis-sig) indiquant que la capacité (C) doit être déchargée.

14. Dispositif selon l'une quelconque des revendications 1 à 13, dans lequel le composant résistif (201) est configuré pour correspondre à un circuit ouvert lorsque sa valeur maximale est sélectionnée.

15. Dispositif selon les revendications 13 et 14, dans lequel, en l'absence d'indication que la capacité (C) doit être déchargée, le dispositif est configuré pour que la valeur maximale du composant (201) soit sélectionnée.
